# EUROPÄISCHE PATENTSCHRIFT

(11) **EP 2 781 712 B1**
(45) Veröffentlichungstag und Bekanntmachung des Hinweises auf die Patenterteilung: **09.08.2017**
(21) Anmeldenummer: 14156502.8
(22) Anmeldetag: 25.02.2014
(51) Int. Cl.: F01N 13/14, F02B 77/11, F16L 59/14

(54) **Fahrzeugbauteil mit einer Isolierung**
Vehicle component with insulation means
Composant de véhicule avec dispositif d'isolation

(30) Priorität: 18.03.2013 DE 102013204732
(43) Veröffentlichungstag der Anmeldung: 24.09.2014
(73) Patentinhaber: Eberspächer Exhaust Technology GmbH & Co. KG, 66539 Neunkirchen (DE)
(72) Erfinder: Neu, Markus, 66564 Ottweiler (DE)
(74) Vertreter: BRP Renaud & Partner mbB Rechtsanwälte Patentanwälte Steuerberater

(56) Entgegenhaltungen:
- EP-A1- 1 528 231
- EP-A1- 1 772 603
- EP-A2- 2 348 206
- DE-A1- 3 821 468
- JP-A- S59 136 521

## Beschreibung

Die Erfindung betrifft ein Fahrzeugbauteile, beispielsweise Abgasanlagekomponenten wie Partikelfilter und SCR-Anlagen, gemäß dem Oberbegriff des Anspruchs 1.

Ein gattungsgemäßes Fahrzeugbauteil ist aus der EP 1 528 231 A1 bekannt und weist an seiner Außenseite wenigstens eine Isolierung auf, die ein plattenartiges Bauteil und zumindest einen separaten Träger aufweist. Beim bekannten Fahrzeugbauteil handelt es sich um einen Grundkörper, an dem mithilfe von Schrauben eine thermisch belastete Schale befestigt ist, wobei die Schrauben über eine Halterung an die Schale angebunden sind, die eine thermische Entkopplung gegenüber der Schale bewirkt.

Die EP 1 772 603 A1 zeigt einen Rohrkörper, an dem ein Mantel mittels einer Schweißnaht befestigt ist, um einen Hohlraum zur Unterbringung eines Isolationsmaterials auszubilden.

Eine derartige Isolierung weist zumindest ein plattenartiges Bauteil auf. Dieses ist bei bekannten Isolierungen zumeist als besonders dünnes Metallblech ausgebildet, welches zumeist eine strukturierte, beispielsweise gewellte oder genoppte Oberfläche aufweist. Hierdurch wird zum einen eine große Oberfläche geschaffen, die sich durch eine effiziente Wärmeabstrahlung auszeichnet. Zum anderen wird zwischen dem zu isolierenden Bereich des jeweiligen Bauteils, insbesondere der jeweiligen Abgasanlagenkomponente, eine Art Luftspalt geschaffen, der eine Luftspaltisolation bewirkt und die Wärmeübertragung vom isolierten Bereich auf die plattenförmige, dünnwandige Isolierung stark reduziert.

Bekannte Isolierungen haben insbesondere den Nachteil, dass eine Befestigung der üblicherweise dünnwandigen Isolierung an dem zu isolierenden Fahrzeugbauteil sehr aufwendig und sehr kostenintensiv ist. Denn Isolierungen werden überwiegend verschraubt, da die sehr dünnen plattenartigen Bauteile bekannter Isolierungen nicht oder nur sehr aufwendig geschweißt werden können, beispielsweise durch Punkten. Für das Verschrauben müssten zunächst vorbereitend mehrere Bohrungen in die Isolierung eingebracht werden, danach müssten mehrere Schrauben nacheinander eingebracht werden.

Die vorliegende Erfindung beschäftigt sich mit dem Problem, eine neuartige Isolierung bereitzustellen, welche besonders einfach, schnell und kostengünstig befestigbar ist, insbesondere mittels Schweißen befestigbar.

Dieses Problem wird erfindungsgemäß durch den Gegenstand des unabhängigen Anspruchs gelöst. Vorteilhafte Ausführungsformen sind Gegenstand der abhängigen Ansprüche.

Die Lösung des Problems wird erfindungsgemäß bereits dadurch erreicht, dass beim erfindungsgemäßen Fahrzeugbauteil die Isolierung zusätzlich zum plattenartigen Bauteil zumindest einen separaten Träger aufweist, mit dessen Hilfe das plattenartige Bauteil und somit die ganze Isolierung an dem zu isolierenden Fahrzeugbauteil befestigt ist.

Der separate Träger kann vorzugsweise denselben Werkstoff umfassen wie das plattenartige Bauteil, insbesondere Metall. Ferner kann der Träger andere schweißbare Materialien umfassen, beispielsweise Thermoplaste, Glas und/oder Glasfasern.

Der separate Träger kann vorzugsweise Befestigungsmittel aufweisen. Dabei können die Befestigungsmittel vorzugsweise zur Befestigung des plattenartigen Bauteils am Träger ausgebildet sein.

Besonders bevorzugt können diese Befestigungsmittel erste Mittel zur mechanisch lösbaren Befestigung des plattenartigen Bauteils am Träger aufweisen. Beispielsweise kann der Träger Schnapp-, Klett-, Schraub- und Klemmverbindungen umfassen, mit deren Hilfe das plattenartige Bauteil am Träger fixierbar ist.

Um eine besonders schnelle und einfache Befestigung zu erreichen, können die ersten Mittel zur mechanischen Befestigung vorzugsweise zumindest ein Klemmprofil umfassen. Auf diese Weise ist eine Befestigung des plattenartigen Bauteils durch Einschieben eines äußeren Rands desselben in das Klemmprofil realisierbar.

Der Träger kann dabei selbst das Klemmprofil bilden bzw. als solches ausgestaltet sein. Somit bildet das Klemmprofil einen integralen Bestandteil oder Abschnitt des Trägers.

Gemäß einer Weiterentwicklung kann das Klemmprofil zumindest zwei Schenkel aufweisen und als U-förmiges Klemmprofil ausgebildet sein. In Einbaulage ist das zwischen den Schenkeln eingebrachte plattenartige Bauteil mittels der Schenkel einklemmbar. Besonders bevorzugt kann dieses U-Profil bzw. der Träber mit einem das U-Profil bildenden Abschnitt durch Falten eines Blechs, beispielsweise eines rechteckigen ebenen Metallblechs herstellbar sein.

Diese Schenkel können gerade ausgebildet sein. Gemäß einer Weiterentwicklung können die Schenkel einen gewölbten Abschnitt aufweisen, um ein besonders einfaches Einschieben des plattenartigen Bauteils und eine höhere Klemmwirkung zu realisieren.

Gemäß einer Weiterentwicklung können die Schenkel bzw. der Träger zudem zumindest einen dem darin eingesetzten plattenartigen Bauteil zugewandten Fortsatz umfassen, der vorzugsweise auf der Innenseite eines Schenkel bzw. des Trägers ausgebildet sein kann, um ein Verrutschen des plattenartigen Bauteils in Einbaulage zu verhindern. Hierfür kann der Fortsatz besonders bevorzugt wenigstens einen spitzen Abschnitt umfassen. Ferner kann der Träger bzw. können die Schenkel eine raue und/oder gummiartige Oberfläche aufweisen, um die Haftung zwischen plattenartigem Bauteil und Träger zu verbessern.

Besonders bevorzugt kann der Träger in Einbaulage eine sich in Bezug auf einen äußeren Rand des plattenartigen Bauteils längliche Gestalt aufweisen. Auch die beschriebenen Schenkel können bevorzugt eine solche Gestalt aufweisen, so dass eine besonders gute Klemmwirkung dadurch erreichbar ist, dass auch besonders lange Abschnitte des plattenartigen Bauteils in Einbaulage in den Träger bzw. die Schenkel einklemmbar sind. Der Träger bzw. die Schenkel können sich beispielsweise von 5mm bis 500mm lang sein, wobei die Länge an die Abmaße des plattenartigen Bauteils angepasst sein kann.

Der Träger bzw. die Schenkel erstrecken sich zudem in Einbaulage senkrecht zu dem äußeren Rand des plattenartigen Bauteils, so dass der Träger bzw. die Schenkel einen Anschnitt des plattenartigen Bauteils in Einbaulage bedecken, um eine besonders gute Klemmwirkung zu erzielen. Der Träger bzw. die Schenkel können beispielsweise von 5mm bis 500mm breit sein.

Gemäß einer bevorzugten Weiterentwicklung kann der Träger zudem wenigstens einen schweißbaren Abschnitt umfassen, insbesondere MAG-schweißbare Abschnitte. Derart ist eine feste Verbindung durch Schweißen am Träger realisierbar. Hierfür kann der Träger besonders bevorzugt schweißbare Materialien wie Metall, Thermoplaste und Glas bzw. Glasfasern umfassen bzw. daraus hergestellt sein. Ferner kann der Träger eine Materialstärke von mindestens 0.1 bis 5 mm aufweisen. Insbesondere ist der Träger ein Blechformteil, dessen Wandstärke vorzugsweise größer ist als eine Wandstärke des plattenartigen Bauteils. Somit lässt sich der Träger einfacher an das zu isolierende Bauteil anschweißen.

Besonders bevorzugt kann das plattenartige Bauteil ebenfalls Metall, Thermoplaste und/oder Glas bzw. Glasfasern umfassen. Das plattenartige Bauteil kann eine Materialstärke von 0.1 mm bis 2mm aufweisen. Da das plattenartige Bauteil selbst eine sehr geringe Materialstärke aufweisen kann, ist mittels des Trägers nun auch das MAG-schweißen eines sehr dünnen plattenartigen Bauteils möglich. Denn in Einbaulage summieren sich die Materialienstärken des Trägers und des plattenartigen Bauteils. Mit anderen Worten wird somit gemäß einer bevorzugten Ausführungsform erreicht, dass das plattenartige Bauteil zusammen mit dem Träger an das zu isolierende Bauteil mittels wenigstens einer gemeinsamen Schweißstelle, z.B. Schweißpunkt oder Schweißnaht, angeschweißt werden kann, auch wenn das plattenartige Bauteil eine für Schweißverbindungen an sich ungeeignete geringe Wandstärke besitzt. Die jeweilige gemeinsame Schweißstelle verbindet dabei den Träger mit dem zu isolierenden Fahrzeugbauteil und das plattenartige Bauteil mit dem Träger und mit dem zu isolierenden Fahrzeugbauteil. Insbesondere entspricht die jeweilige gemeinsame Schweißstelle einer sogenannten Drei-Blech-Schweißstelle, da letztlich drei Blechkörper über eine einzige gemeinsame Schweißstelle miteinander verbunden werden, nämlich das plattenartige Bauteil, der als Blechformteil konzipierte Träger und eine aus einem Blech hergestellte Wand des zu isolierenden Fahrzeugbauteils.

Erfindungsgemäß weist der Träger eine Aussparung auf, die derart angeordnet ist, dass ein Abschnitt des im Träger aufgenommenen äußeren Rands des plattenartigen Bauteils in der Aussparung angeordnet ist.

Die Aussparung kann beispielsweise einen rechteckigen Rand aufweisen. Erfindungsgemäß ist die Aussparung derart ausgebildet, dass in Einbaulage der äußere Rand des plattenartigen Bauteils an einen inneren Rand der Aussparung anliegt. Dabei müssen die beiden Ränder nicht bündig miteinander abschließen, vielmehr kann der eine Rand, vorzugsweise der trägerseitige innere Rand der Aussparung, über den anderen Rand, vorzugsweise den Rand des plattenartigen Bauteils, vorstehen. Auf diese Weise ist der äußere Rand des plattenartigen Bauteils in Einbaulage mit dem Träger verschweißbar, insbesondere MAGverschweißbar z.B. mit nur einer Naht. Ferner kann in diesem Fall mit nur einer Schweißnaht bzw. mit wenigstens einer gemeinsamen Schweißstelle das plattenartige Bauteil am Träger und der Träger an der jeweiligen Abgasanlagenkomponente befestigt werden.

Besonders bevorzugt kann sich die Aussparung in Einbaulage bis in die Nähe desjenigen Fahrzeugbauteils erstrecken, an dem die Isolierung anzubringen ist. Hierfür kann sich die Aussparung beispielsweise zumindest teilweise entlang einer Mittelachse des Trägers erstrecken, bzw. in unmittelbarer Nähe zu einer Mittelachse des Trägers ausgebildet sein.

Da das Fahrzeugbauteil ebenfalls ein schweißbares Material umfasst, sind nun der Träger, das plattenförmige Bauteil und das Fahrzeugbauteil mittels schweißen verbindbar, insbesondere mittels nur einer MAG-Schweißnaht. Erfindungsgemäß sind durch Verschweißung zumindest der Träger und das Fahrzeugbauteil miteinander verbunden.

Bei der Isolierung ist durch den schnell und einfach auf das plattenartige Bauteil aufklemmbaren, separaten Träger nun auch besonders schnell und einfach eine MAG-Schweißverbindung zwischen der Isolierung, die das plattenartige Bauteil und den jeweiligen Träger umfasst, und dem zu isolierenden Fahrzeugbauteil realisierbar. Dementsprechend charakterisiert sich ein Herstellungsverfahren dadurch, dass zunächst wenigstens ein solcher Träger an einem Rand eines solchen plattenartigen Bauteils angebracht wird, und dass anschließend zumindest der jeweilige Träger an das zu isolierenden Fahrzeugbauteil angeschweißt wird, wobei mittels wenigstens einer Schweißstelle der jeweilige Träger an dem zu isolierenden Fahrzeugbauteil befestigt wird. Bevorzugt ist dabei eine Ausführungsförm, bei der das Anschweißen des Trägers so erfolgt, dass mittels wenigstens einer solchen Schweißstelle sowohl der Träger am jeweiligen Fahrzeugbauteil als auch das plattenförmige Bauteil am Träger und/oder am jeweiligen Fahrzeugbauteil befestigt wird. Besonders bevorzugt ist eine Variante, bei welcher die Schweißstelle durch eine Schweißnaht gebildet ist, die sich im Wesentlichen über die gesamte vorstehend genannte Aussparung des Trägers entlang des in dieser Aussparung angeordneten Rands des plattenartigen Bauteils erstreckt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Ein erfindungsgemäßes Fahrzeugbauteil, das vorzugsweise eine Abgasanlagenkomponente ist, charakterisiert sich durch wenigstens eine derartige Isolierung der vorstehend beschriebenen Art, deren plattenartiges Bauteil mittels wenigstens eines Trägers an einer Außenseite des Bauteils bzw. der Komponente befestigt ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Figur 1: eine Draufsicht auf eine bevorzugte Ausführungsform der Isolierung,
- Figur 2: eine Schnittansicht der Isolierung gemäß Schnittlinien II in Figur 1,
- Figur 3: eine Schnittansicht der Isolierung gemäß Schnittlinien III in Figur 1,
- Figur 4: eine Schnittansicht wie in Figur 3, jedoch bei an einem Fahrzeugbauteil befestigter Isolierung.

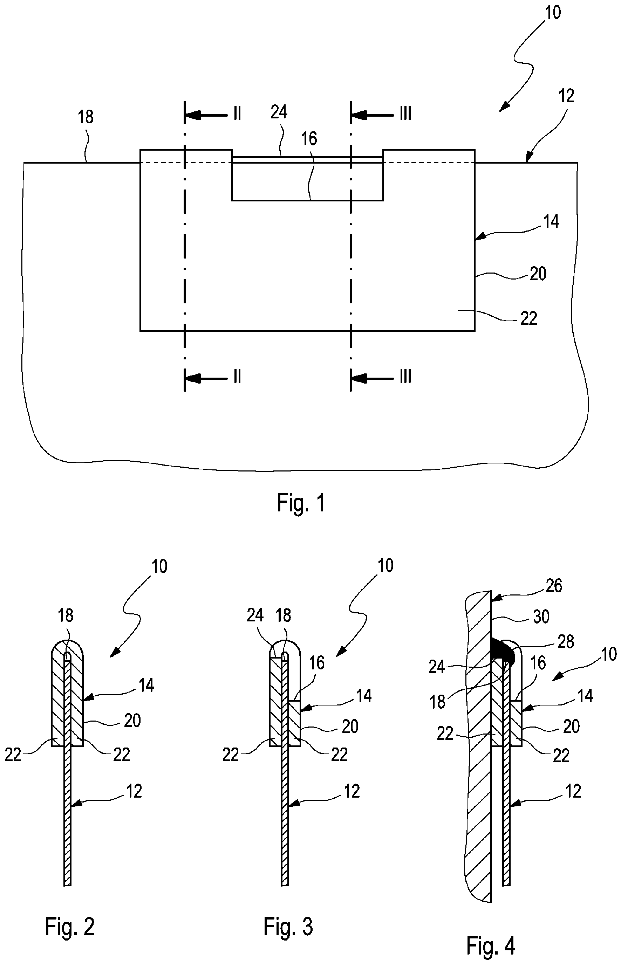

Entsprechend den Figuren 1 bis 4 weist eine bevorzugte Ausführungsform einer Isolierung 10 ein plattenartiges Bauteil 12 und zudem zumindest einen separaten Träger 14 auf. Das plattenartige Bauteil 12 ermöglicht die Isolationsfunktion, während der Träger 14 eine Befestigung der Isolierung an einem zu isolierenden, nur in Fig. 4 angedeuteten Fahrzeugbauteil 26 ermöglicht.

Das plattenartige Bauteil 12 ist aus einem sehr dünnen Metallblech mit einer Materialstärke von z.B. 0.1 mm bis 2mm, vorzugsweise von 0.2mm ausgebildet. Dieser separate Träger 14 weist zumindest eine Aussparung 16 auf, wobei in Einbaulage ein äußerer Rand 18 des plattenartigen Bauteils 12 in der Aussparung 16 angeordnet ist.

Der separate Träger 14 weist Befestigungsmittel auf, die vorliegend ein Klemmprofil 20 umfassen bzw. durch das Klemmprofil 20 gebildet sind. Das Klemmprofil 20 weist zwei Schenkel 22 auf und ist als U-förmiges Klemmprofil 20 ausgebildet. Die Schenkel 22 sind z.B. 75 mm lang und z.B. 10 mm breit. In Einbaulage, dar- gestellt in den Figuren 1 bis 4, ist der äußere Rand 18 des plattenartigen Bauteils 12 zwischen den Schenkeln 22 eingeklemmt.

Der Träger 14 ist aus Metall ausgebildet, weist eine Materialstärke von z.B. 0.1 mm bis 5mm, vorzugsweise von 0.5mm auf und ist schweißbar. Bevorzugt besitzt der Träger 14 eine größere Wand- oder Materialstärke als das plattenartige Bauteil 12. Der Träger 14 ist vorliegend durch Falten eines rechteckigen 75mm langen und 20mm breiten Blechs an einer Mittellängsachse herstellbar. Somit handelt es sich beim Träger 14 um ein Blechformteil.

Die Aussparung 16 des separaten Trägers 14 ist derart ausgebildet, dass ein Abschnitt des äußeren Rands 18 des plattenartigen Bauteils 12 an einem inneren Rand 24 der Aussparung 16 des Trägers 12 in Einbaulage anliegt. Auf diese Weise ist gemäß Fig. 4 z.B. mittels einer MAG-Schweißnaht 28 entlang des äußeren Rands 18 des plattenartigen Bauteils 12 und des inneren Rands 24 der Aussparung 16 des Trägers 14 eine feste Verbindung der erfindungsgemäßen Isolierung 10 und dem nur teilweise darstellten anliegenden Fahrzeugbauteil 26 besonders schnell und einfach möglich. Denn durch die aufgetragene Materialstärke des Trägers 14 wird ein Schweißen des in der Regel sehr dünnen plattenartigen Bauteils 12 erst ermöglicht. Der Träger 14 ist dabei insbesondere im Bereich des inneren Rands 24 mit dem Fahrzeugbauteil 26 verschweißbar, so dass zumindest der innere Rand 24 einen schweißbaren Abschnitt des Trägers 14 definiert. Die Isolierung 10 ist dabei vorzugsweise an einer Außenseite 30 des Fahrzeugbauteils 26 angeordnet bzw. daran befestigt. Das Fahrzeugbauteil 26 kann insbesondere eine Abgasanlagenkomponente sein, wie z.B. ein Katalysator, ein Partikelfilter, ein Schalldämpfer oder ein Abgasrohr oder eine beliebige Kombination der vorstehenden Komponenten.

Da der Träger 14 sehr schnell und einfach randseitig auf das plattenartige Bauteil 12 aufgeklemmt werden kann und anschließend die feste Verbindung zu dem Fahrzeugbauteil 26 bereits wie beschrieben mit einer Schweißnaht oder einer anderen Schweißstelle möglich ist, wird durch die Erfindung eine Isolierung 10 bereitgestellt, welche besonders einfach, schnell und kostengünstig befestigbar ist. Denn insbesondere im Vergleich zu einer Befestigung mittels Verschrauben ist die erfindungsgemäße Isolierung 10 schneller und mit weniger Arbeitsschritten befestigbar und daher auch besonders kostengünstig.

## Patentansprüche

1. Fahrzeugbauteil (26), insbesondere Abgasanlagenkomponente, das an seiner Außenseite (30) wenigstens eine Isolierung (10) aufweist, die ein plattenartiges Bauteil (12) und zumindest einen separaten Träger (14) aufweist,
**dadurch gekennzeichnet,**
- **dass** das jeweilige plattenartige Bauteil (12) mittels wenigstens eines solchen Trägers (14) an der Außenseite (30) befestigt ist,
- **dass** der Träger (14) eine Aussparung (16) aufweist, die derart ausgebildet ist, dass ein Abschnitt des äußeren Rands (18) des plattenartigen Bauteils (12) an einem inneren Rand (24) der Aussparung (16) des Trägers (14) in Einbaulage anliegt,
- **dass** der innere Rand (24) der Aussparung (16) so am Träger (14) angeordnet ist, dass der Träger (14) entlang des inneren Rands (24) mit dem Fahrzeugbauteil (26) verschweißt ist.

2. Fahrzeugbauteil (26) nach Anspruch 1,
**dadurch gekennzeichnet, dass** der äußere Rand (18) des plattenartigen Bauteils (12) so am inneren Rand (24) der Aussparung (16) anliegt, dass das plattenartige Bauteil (12) entlang des inneren Rands (24) mit dem Träger (14) verschweißt ist.

3. Fahrzeugbauteil (26) nach Anspruch 2,
**dadurch gekennzeichnet, dass** der äußere Rand (18) des plattenartigen Bauteils (12) so am inneren Rand (24) der Aussparung (16) anliegt, dass mittels wenigstens einer gemeinsamen Schweißstelle (28) der Träger (14) mit dem Fahrzeugbauteil (26) und das plattenartige Bauteil (12) mit dem Träger (14) und/oder mit dem Fahrzeugbauteil (26) verschweißt ist.

4. Fahrzeugbauteil (26) nach einem der Ansprüche 1 bis 3,
**dadurch gekennzeichnet, dass**
der separate Träger (14) Befestigungsmittel (20, 22) zur Befestigung des plattenartigen Bauteils (12) am Träger (14) aufweist.

5. Fahrzeugbauteil (26) nach Anspruch 4
**dadurch gekennzeichnet, dass** die Befestigungsmittel (20, 22) zumindest ein Klemmprofil umfassen (20).

6. Fahrzeugbauteil (26) nach Anspruch 5,
**dadurch gekennzeichnet dass**, das Klemmprofil (20) zumindest zwei Schenkel (22) aufweist und als U-förmiges Klemmprofil (20) ausgebildet ist.

7. Fahrzeugbauteil (26) nach Anspruch 5 oder 6,
**dadurch gekennzeichnet, dass** der Träger (14) als Klemmprofil (20) ausgestaltet ist.

8. Fahrzeugbauteil (26) nach einem der Ansprüche 1 bis 7,
**dadurch gekennzeichnet, dass** der Träger (14) zudem einen schweißbaren Abschnitt umfasst.

9. Fahrzeugbauteil (26) nach einem der Ansprüche 1 bis 8,
**dadurch gekennzeichnet, dass** der Träger (14) eine größere Wand- oder Materialstärke besitzt als das plattenartige Bauteil (12).

## Claims

1. A vehicle part (26), in particular exhaust system component, which has on its outer side (30) at least one insulation means (10), comprising a plate-like part (12) and at least one separate carrier (14),
**characterized in**
- **that** the respective plate-like part (12) is fastened to the outer side (30) by means of at least one such carrier (14),
- **that** the carrier (14) has a cut-out (16), which is formed in such a manner that a section of the outer edge (18) of the plate-like part (12) bears against an inner edge (24) of the cut-out (16) of the carrier (14) when in the installed position,
- **that** the inner edge (24) of the cut-out (16) is arranged on the carrier (14) in such a manner that the carrier (14) can be welded to a vehicle part (26) along the inner edge (24).

2. The vehicle part (26) according to Claim 1,
**characterised in that** the outer edge (18) of the plate-like part (12) bears against the inner edge (24) of the cut-out (16) in such a manner that the plate-like part (12) can be welded to the carrier (14) along the inner edge (24).

3. The vehicle part (26) according to Claim 2,
**characterised in that** the outer edge (18) of the plate-like part (12) bears against the inner edge (24) of the cut-out (16) in such a manner that the carrier (14) can be welded to the vehicle part (26) and the plate-like part (12) can be welded to the carrier (14) and/or to the vehicle part (26) by means of at least one common weld location (28).

4. The vehicle part (26) according to any one of Claims 1 to 3,
**characterised in that**
the separate carrier (14) has fastening means (20, 22) for fastening the plate-like part (12) to the carrier (14).

5. The vehicle part (26) according to Claim 4,
**characterised in that** the fastening means (20, 22) comprise at least one clamping profile (20).

6. The vehicle part (26) according to Claim 5,
**characterised in that** the clamping profile (20) has at least two limbs (22) and is formed as a U-shaped clamping profile (20).

7. The vehicle part (26) according to Claim 5 or 6,
**characterised in that** the carrier (14) is designed as a clamping profile (20).

8. The vehicle part (26) according to any one of Claims 1 to 7,
**characterised in that** the carrier (14) additionally comprises a weldable section.

9. The vehicle part (26) according to any one of Claims 1 to 8,
**characterised in that** the carrier (14) has a larger wall or material thickness than the plate-like part (12).

## Revendications

1. Composant de véhicule (26), en particulier composant d'installation de gaz d'échappement, qui présente sur sa face externe (30) au moins un isolement (10) qui présente un composant (12) en forme de plaque et au moins un support séparé (14),
**caractérisé en ce que** :
- le composant respectif (12) en forme de plaque est fixé sur la face externe (30) au moyen d'au moins un tel support (14),
- le support (14) présente un évidement (16) qui est conçu en sorte qu'une section du bord externe (18) du composant (12) en forme de plaque s'ajuste sur un bord interne (24) de l'évidement (16) du support (14) en position de montage,
- le bord interne (24) de l'évidement (16) est agencé sur le support (14) en sorte que le support (14) soit soudé au composant de véhicule (26) le long du bord interne (24).

2. Composant de véhicule (26) selon la revendication 1,
**caractérisé en ce que** le bord externe (18) du composant (12) en forme de plaque s'ajuste sur le bord interne (24) de l'évidement (16) de sorte que le composant (12) en forme de plaque soit soudé au support (14) le long du bord interne (24).

3. Composant de véhicule (26) selon la revendication 2,
**caractérisé en ce que** le bord externe (18) du composant (12) en forme de plaque s'ajuste sur le bord interne (24) de l'évidement (16) en sorte que le support (14) soit soudé au composant de véhicule (26) au moyen d'au moins un point de soudure commun (28) et que le composant (12) en forme de plaque soit soudé au support (14) et/ou au composant de véhicule (26).

4. Composant de véhicule (26) selon l'une quelconque des revendications 1 à 3,
**caractérisé en ce que** le support séparé (14) présente des moyens de fixation (20, 22) pour fixer le composant (12) en forme de plaque au support (14).

5. Composant de véhicule (26) selon la revendication 4,
**caractérisé en ce que** les moyens de fixation (20, 22) comprennent au moins un profilé de serrage (20).

6. Composant de véhicule (26) selon la revendication 5,
**caractérisé en ce que** le profilé de serrage (20) présente au moins deux branches (22) et se présente sous la forme d'un profilé de serrage (20) en forme de U.

7. Composant de véhicule (26) selon la revendication 5 ou 6,
**caractérisé en ce que** le support (14) est conçu sous la forme d'un profilé de serrage (20).

8. Composant de véhicule (26) selon l'une quelconque des revendications 1 à 7,
**caractérisé en ce que** le support (14) comprend en plus une section soudable.

9. Composant de véhicule (26) selon l'une quelconque des revendications 1 à 8,
**caractérisé en ce que** le support (14) possède une épaisseur de paroi ou de matériau plus grande que celle du composant (12) en forme de plaque.
